# EUROPÄISCHE PATENTANMELDUNG

(11) **EP 1 138 592 A1**
(43) Veröffentlichungstag der Anmeldung: **04.10.2001**
(21) Anmeldenummer: 01107139.6
(22) Anmeldetag: 22.03.2001
(51) Int. Cl.: B64D 13/06, B64D 13/08

(54) **Anordnung zur Zwangsführung eines Kühlluftstromes innerhalb eines Kühlaggregats eines Verkehrsflugzeugs**

(30) Priorität: 29.03.2000 DE 10015570
(71) Anmelder: EADS Airbus GmbH, 21129 Hamburg (DE)
(72) Erfinder: Buchholz, Uwe Albert, Dipl.-Ing., 21640 Biedersdorf (DE); Kelnhofer, Jürgen, Dipl.-Ing., 21635 Jork (DE)
(74) Vertreter: Hansmann, Dierk, Dipl.-Ing.

(57) **Zusammenfassung**

Die Anordnung bezieht sich auf einen Wärmetauscher (1), dem ein aus der Flugzeugumgebung luftaufnehmender Einlasskanal (8) und eine an die Flugzeugumgebung luftabführende Wärmetauscher-Sammelkammer (4) sowie ein mit Triebwerksluft gespeister Zuluftkanal (15) angeschlossen ist. Die Wärmetauscher-Sammelkammer ist mit wenigsten zwei Kanälen (71,9) ausgestattet, die von dem luftabführenden Wärmetauscher (1) situationsabhängig (nach dem aktuellen Betriebszustand des Flugzeuges) getrennt mit Luft versorgt werden. Einem zweiten Kanal (9), der dem Wärmetauscher ausgangsseitig direkt angeschlossen ist, ein erster Kanal (71) abgezweigt, dessen Ausgang einem als Luft-Mischstelle (10) definierten Kanalbereich des zweiten Kanals zugeschalten ist. Am Eingang des ersten Kanals ist eine Turboluftmaschine (3) installiert, mit der (in sehr niedriger Flughöhe oder) bei Bodenhaftung des Flugzeuges aus der Flugzeugumgebung über den Wärmetauscher geführte Kühlluft angesaugt wird, die (in höherer Fluglage oder) während des Fluges des Flugzeuges als Stauluft direkt durch den zweiten Kanal (9) gedrückt wird.

## Beschreibung

Die Erfindung bezieht sich auf eine Anordnung zur Zwangsführung eines Kühlluftstromes innerhalb eines Kühlaggregates für ein Verkehrsflugzeug gemäß dem Oberbegriff des Anspruchs 1. Mit der Anordnung wird das Betreiben einer Wärmetauscher-Sammelkammer im Vergleich mit bekannten Konfigurationen und zu unterschiedlichen Betriebszuständen des Flugzeuges ohne wirtschaftliche und aerodynamische Nachteile geschehen.

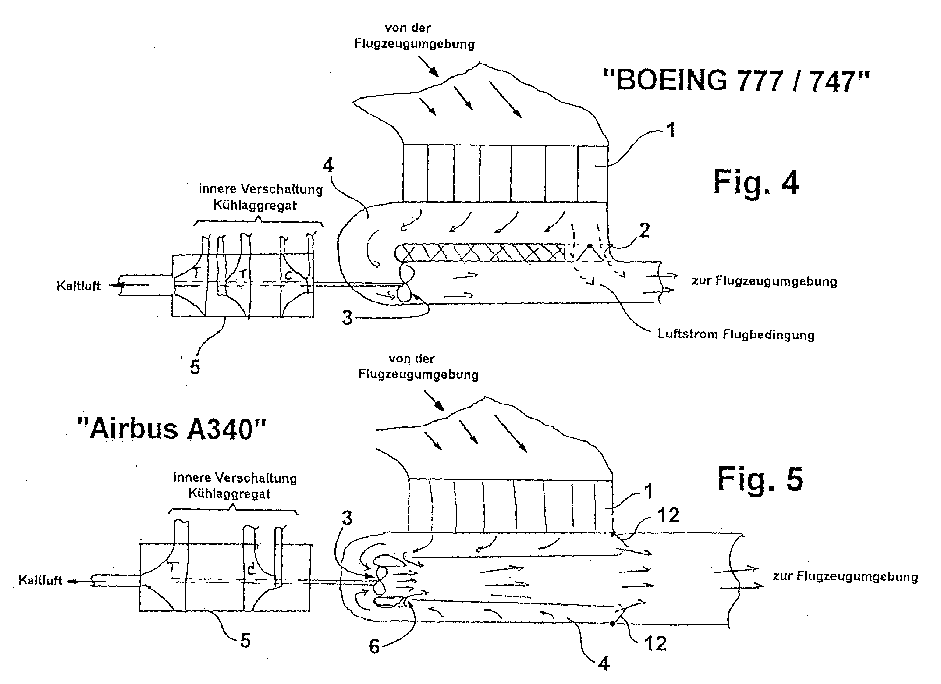

In Flugzeug-Kühlaggregaten (Packs oder Air Generation Units) wird hochverdichtete Triebwerksluft, die über Rohrleitungen den Kühlaggregaten zugeleitet wird, in einem kombinierten thermodynamischen Prozeß auf Flugzeugkabinen-Druckniveau entspannt und auf eine vorgegebene Lufttemperatur abgekühlt. Der kombinierte thermodynamische Prozeß besteht aus einem Wärmetausch- und Turbinenentspannungsprozeß mit Zwischenkompression. Hierbei wird ein wesentlicher Anteil der Wärme in den Wärmetauschprozeß abgegeben. Dabei wird durch eine Wärmetauschmatrix Prozessluft (triebwerksbezogene Bleed Air) und ein Kühlluftstrom hindurchgeleitet. Währenddessen überträgt die Matrixoberfläche die Wärme von der Prozessluft auf den Kühlluftstrom. Die Wärmetauschermatrix ist mit einem Kanalsystem verbunden, welches den Kühlluftstrom während des Fluges sowie während des Bodenaufenthaltes eines Verkehrsflugzeuges dem Wärmetauscher zuführt und ableitet. Während des Fluges (Start- und Landeanflug, Reiseflug) ist ein Einlasskanal mit der Flugzeugumgebung dermaßen verbunden, dass durch die Flugbewegung des Flugzeuges der dynamische Luftdruck sowie eine durch die Flugzeugformgebung mögliche Luftdruckdifferenz als Energiequelle zur Förderung des Kühlluftstromes durch das Kanalsystem und die Wärmetauschermatrix dient. Ein auf dem Boden befindliches (parkendes oder rollendes) Flugzeug kann diese Energiequelle nicht verwenden, obwohl eine Wärmeabgabe in der Wärmetauschermatrix zur (fortgesetzten) Aufrechterhaltung des (nicht zu gefährdenden) Betriebes des Kühlaggregates (während der Flugvorbereitung oder dem Abschluß eines Fluges) weiterhin stattfindet. Daher wird bei bekannten Konfigurationen der Firmen: "BOEING und AIRBUS", die man aus den beigegebenen Figuren 4 und 5 ersehen kann, dem Kanalsystem eine Turboluftmaschine (ein Turbo-Gebläse) hinzugefügt, welche am Boden die benötigte Energie, die während des Fluges verfügbar ist, liefert. Zum Antrieb der Turboluftmaschine kann die Prozessenergie einer Air-Cycle-Maschine (ACM) des Kühlaggregates entnommen werden, oder anderenfalls ein (zusätzlicher) Elektromotor die(se) Turboluftmaschine antreiben. Beide Möglichkeiten wären denkbar. Bei der Betrachtung der für die Flugzeugtypen: "BOEING 777 und BOEING 747 oder Airbus A340" vorgesehenen Konfigurationen (nach den Figuren 4 und 5) wird der Fachmann erkennen, dass der Sammelkammer, die dem Wärmertauscher nachgeschalten ist, eine besondere Bedeutung zukommt, weil auch, bedingt durch die vorerwähnten unterschiedlichen Betriebsbedingungen (Flug- bzw. Bodenphase eines Flugzeuges), die mit einer höhenvarianten Dichteänderung korrelieren, nach diesen Vorbildern - in den konstruktiv (vergleichsweise) einander etwas abweichenden Sammelkammer(n) - mit einem (sich unterscheidenden) Bypass-System gearbeitet wird.

Die abweichende Anordnung von Ventilen (BOEING 777/747 nach Fig. 4), Klappen (Airbus A340 nach Fig. 5) und Injektoren (A340-600 nach Fig. 5) zur Umsetzung der (miteinander verglichenen) Bypass-Lösungen läßt sich kaum übersehen. Femer fällt durch die Anordnung der Turboluftmaschinen in der Air-Cycle-Maschine, welche man außerdem dem Kühlluftkanal der Sammelkammer - bei beiden Konfigurationen - innerhalb einem definiertem Sammelkammer-Bereich integriert, sowie durch die Expansionsturbinen-Ausgangsrichtung die Funktion und Arbeitsweise (technischen Eigenschaften) für die einzelne (vorgestellte) Sammelkammer demgemäß unterschiedlich aus. Die Wellenausrichtung der betreffenden Air-Cycle-Maschine erzwingt eine achsenparallele Wärmetauscherausrichtung, um (nach den Lösungen der Figuren 4 und 5) eine optimale Luftumströmung der Turbo(kühl)luftmaschine zu gewährleisten. Aufgrund dieser (der Fachwelt näher) bekannten Einbaulagen der Kühlaggregate in einem Verkehrsflugzeug, nach denen sich die Expansionsausrichtung in Flugrichtung liegend befindet, wird man (dagegen) die Sammelkammerabströmung entgegen der Flugrichtung vorfinden.

Die Kombination aus Air-Cycle-Maschinen-Ausrichtung, Wärmetauscheranordnung, Kühlluftstrom-Turbomaschinenausströmung sowie die zu unterscheidenden Betriebsfälle (Flug- oder Bodensituation eines Flugzeuges) erfordern aerodynamische Luftführungen, welche die in den Figuren 4 und 5 gezeigte Sammelkammer mit dem (den) vorgenannten Bypasssystem(en) hervorgebracht haben. Ändert sich nun die bekannte Einbaulage, so wird eine Expansions(turbinenausgangs)ausrichtung, eine Wärmetauscheranströmung und ein Sammelkammerausgang in der gleichen Richtung, also in Flugrichtung, erforderlich, (dann) sind (aber) die bekannten Konfigurationen nach den Figuren 4 und 5 aerodynamisch nachteilig. Falls man für die Beseitigung dieses Problems - bei einer Verwendung der bekannten Konfigurationen nach "BOEING" und "AIRBUS" - überhaupt eine annähernd akzeptable Lösung präsentieren würde, dann wäre eine erweiternde Installation mit (das Flugzeuggewicht und den Wartungsaufwand ungünstig beeinflußenden) weiteren Kanälen, denen zusätzliche Bögen anzuschließen und die mit zusätzlichen (erweitemden) Ventilen auszurüsten wären, (nach ersten Überlegungen) wohl kaum vermeidbar. Dadurch wird aber der aerodynamische Wirkungsgrad des Kühlluftkanals sinken und Wärmetauscherenergie dem Kühlluftaggergat verloren gehen. Die Kompensation diese Verlustes erfordert dann außerdem eine Vergrößerung aller beteiligten Bauteile, woraus ein erhöhter Platzbedarf und ein für das Flugzeug ungewünschtes Mehrgewicht resultieren wird.

Demzufolge liegt der Erfindung die Aufgabe zugrunde, bekannte Konfigurationen von Sammelkammer-Anordnungen mit integrierter Turbo(kühl)luftmaschine für ein Verkehrsflugzeuges derart zu verbessern, daß bei deren Veränderung der Einbaulage, die mit der Ausrichtung der Air-Cycle-Maschine, der Anordnung des Wärmetauschers und der Kühlstrom-Turbomaschinen-Ausströmung korreliert, keine (durch die verbesserte Anordnung) zu vertretenden aerodynamischen Nachteile des Flugzeuges auftreten werden.

Diese Aufgabe wird durch die im Anspruch 1 angegebenen Maßnahmen gelöst. In den weiteren Ansprüchen 2 bis 8 sind zweckmäßige Ausgestaltungen dieser Maßnahmen angegeben.

Die Erfindung ist in einem Ausführungsbeispiel anhand der Zeichnungen beschrieben. Es zeigen
- **Fig. 1**: die Anordnung zur Zwangsführung eines Kühlluftstromes innerhalb eines Kühlaggregates für ein Verkehrsflugzeug in einer Seitenansicht;
- **Fig. 1A**: den Schnitt B1 - B2 der Anordnung nach der Fig. 1;
- **Fig. 2**: die Anordnung zur Zwangsführung eines Kühlluftstromes innerhalb eines Kühlaggregates für ein Verkehrsflugzeug in einer Draufsicht;
- **Fig. 2A**: den Schnitt A1 - A2 der Anordnung nach der Fig. 3.
- **Fig. 3**: vereinfachte Ausführung der Anordnung nach Fig. 1 (Seitenansicht)

In den Figuren 4 und 5 werden gattungsgemäße Anordnungen, wie man sie bei den Flugzeugtypen "BOEING 777/747 (nach Fig. 4) und "AIRBUS A340" (nach Fig. 5) vorfinden wird, dargestellt. Dabei zeigen
- **Fig. 4**: eine den Typen "BOEING 777/747" eingerüstete Konfiguration;
- **Fig. 5**: eine dem Typ "AIRBUS A340" eingerüstete Konfiguration.

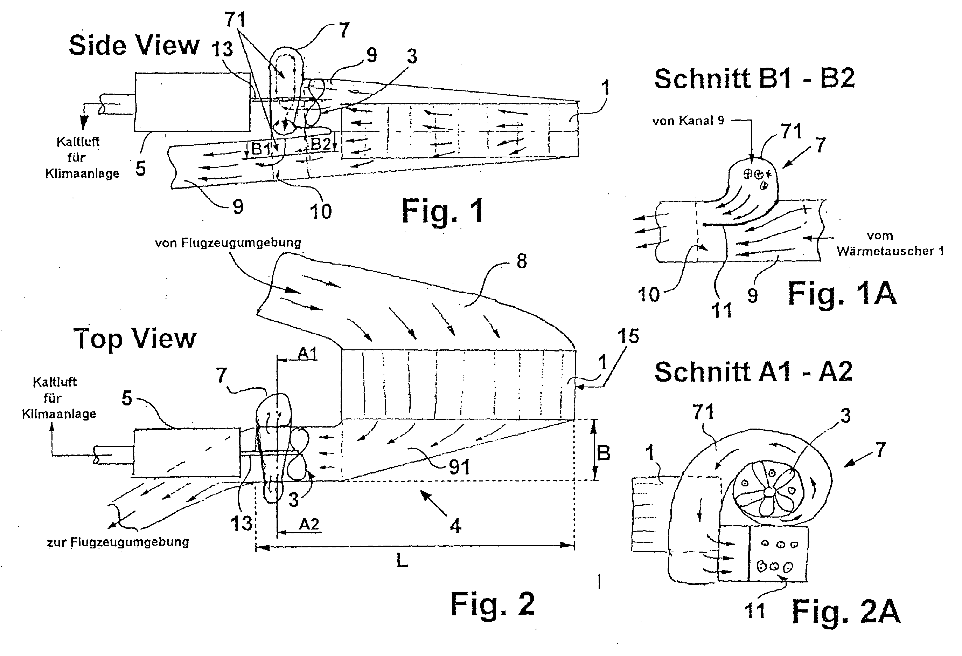

Auf diese (letztgenannten) Darstellungen wird nicht mehr näher eingegangen, weil die Lösungen (nach den Figuren 4 und 5) im Einleitungsteil eingehend diskutiert werden. Auch die dort angegebenen Bezugszeichen korrelieren mit denjenigen der nachfolgend erläuterten Lösungen. Sofern ein Bezugszeichen (im Vergleich der nachfolgenden erläuterten Figuren 1 bis 2A) ergänzt wird, wird der erfahrene Fachmann - ohne weitere Erläuterungen und mit einem Blick auf die beigegebene Bezugszeichenliste - um die Bedeutung und die schaltungsmäßigen Zusammenhänge dieser (im Stand der Technik bekannten) Lösungen und deren funktionellen Einsatz Bescheid wissen.

In der Fig. 1 wird die beispielgemäße Anordnung zur Zwangsführung eines Kühlluftstromes innerhalb eines Kühlaggregates für ein Verkehrsflugzeug - in einer Seitenansicht - dargestellt. Mit einem Vorgriff auf die Darstellung nach der Fig. 2 kann man (wegen dem besseren Verständnis der Fig. 1) aus der dort gezeigten - Draufsicht dieser Anordnung - zunächst entnehmen, dass die Anordnung sich in der Hauptsache auf einen luftaufnehmenden Einlasskanal 8, einen Wärmetauscher 1 (eine Wärmetauschermatrix) und einen (aus der Fig. 1 ersichtlichen) zweigeteilten Auslasskanal (Stauluftkanal), dem an vorgesehener Stelle eine luftansaugende Turboluftmaschine 3 integriert ist, bezieht. Dabei wird - unterscheidend der (schon erwähnten) unterschiedlichen Betriebssituationen (Flug- bzw. Bodensituation) eines Flugzeug -während des Fluges über den Einlassbereich des Einlasskanals 8 von der (unmittelbaren) Flugzeugumgebung kanalangestaute kalte Luft, die derwegen auch als "Stauluft" bezeichnet wird, in den Einlasskanal 8 gedrückt (gepresst). Die dadurch (kanalintem) einsetzende Stauluftströmung wird durch den Einlasskanal 8, der dem Wärmetauscher 1 verbunden ist, strömen und darauffolgend die nachgeschaltete Wärmetauschermatrix erreichen.

Weil außerdem der Wärmetauscher 1 über einen (figurlich angedeuteten) Zuluftkanal 15 mit Prozessluft (weiterer Zuluft) gespeist wird, die vom Triebwerk des Flugzeuges durch Abzapfen von Bleed Air bezogen wird, erfolgt durch den Einfluß der kalten Stauluft auf die Bleed Air innerhalb dem Wärmetauscher 1 durch Wärmeaustausch eine Abkühlung der Bleed Air auf eine gewünschten Temperatur, deren Weiterleitung und Nutzung im (figurlich nicht ausführlich dargestellten) Klimatisierungssystem nicht weiter verfolgt wird. Die durch Temperaturaufnahme (von der Bleed Air) erwärmte Stauluft wird danach in den (anfangs zunächst geschlossenen Querschnitt des hernach zweigeteilten) Auslasskanal(s), der als zweiter Kanal 9 (Stauluftkanal) bezeichnet wird, gedrückt. Dieser (nach dem Beispiel: zweigeteilte) Bereich des Auslasskanals wird allgemein (in Fachkreisen) als (dem Wärmetauscher 1 strömungstechnisch nachgeschalte) Wärmetauscher-Sammelkammer 4 verstanden.

Zurückkommend auf die Fig. 1 wird weiter ausgeführt, dass (nach dieser Darstellung aus Gründen von später angegebenen vorteilhaften Absichten) die (in Fachkreisen als »Plenum" bezeichnete) Wärmetauscher-Sammelkammer 4 mit wenigsten (und auf das Beispiel bezogen - mit nur) zwei Kanälen 71, 9 ausgestattet ist, die von dem eine temperaturerhöhte Stauluft abführenden Wärmetauscher 1- situationsabhängig, also gleichermaßen auf den Flug- oder Bodenfall bezogen - (allgemein betrachtet) "getrennt" mit Teilmengen dieser kanalzugeführten Luft versorgt werden. Dabei ist dem (geschlossenen Querschnitt des) zweiten Kanal(s) 9, der dem Wärmetauscher 1 ausgangsseitig direkt angeschlossen ist, ein erster Kanal 71 abgezweigt, dessen Ausgang einem als Luft-Mischstelle 10 definierten (und dem geschlossenen Querschnitt nachgeordneten) Kanalbereich des zweiten Kanals 9 zugeschalten ist. Der erste Kanal 71 reduziert demnach den geschlossenen Querschnitt des zweiten Kanals 9 um seinen Querschnitt. Am Eingang des ersten Kanals 71, der sich ausgangs der horizontalen Zwangsführung eines durch den Außenbereich des Wärmetauschers 1 abgegrenzten Kanalbereiches des zweiten Kanals 9 befindet, ist eine Turboluftmaschine 3 installiert, mit der (in sehr niedriger Flughöhe oder) bei Bodenhaftung des Flugzeuges aus der Flugzeugumgebung über den Wärmetauscher 1 geführte Kühlluft (temperaturerhöhte Stauluft) angesaugt wird, worauf später eingegangen wird.

Zunächst wird auf die Situation (einer höheren Fluglage oder) während des Fluges eingegangen, wonach die den Wärmetauscher 1 verlassende Kühlluft (als temperaturerhöhte Stauluft) direkt durch den querschnittsreduzierten Bereich des zweiten Kanals 9, also durch den (vom ersten Kanal 71) abgeteilten - bzw. dem geschlossenen Querschnitt des zweiten Kanals 9 folgenden - Kanalbereich, bis in einen als Luft-Mischstelle 10 bezeichneten Kanalbereich (definierter Lage), gedrückt wird.

Weil durch die direkt zugeführte Luftströmung dieser (Art von) Kühlluft gleichfalls ein (wenn auch geringer) Anteil von (sogenannter) Kühlluft, die vom Wärmetauscher 1 abgedrückt (abgeführt) wird, über den ersten Kanal 71 durch ein Mitreißen (Strahlpumpen-Effekt) strömen wird, deren schwach ausgeprägter Luftstrom (über das sich mitbewegende Lüfterrad der Turboluftmaschine 3 geführt) ausgangs des ersten Kanals 1 in den Bereich der Luft-Mischstelle 10 einströmen wird, wird (in diesem Fall) gewünschterweise die Mischung einer Teilmenge an Kühlluft (überwiegenden Anteils) von stark ausgeprägter Luftströmung mit einer Teilmenge an (mit einsetzender) Kühlluft(strömung) (weitaus geringen Anteils) von schwach ausgeprägter Luftströmung im Bereich der Luft-Mischstelle 10 geschehen.

Anderenfalls wird ferner auf die Situation (einer niedrigen Fluglage oder) am Boden (Bodenphase eines Flugzeug infolge Landeabschluß oder Parkstellung oder Flugvorbereitung) eingegangen, da während dieses Zeitraumes der auf den Einlasskanal 8 (vgl. Fig. 2) lastende Stauluftdruck nicht vorhanden sein, um eine Luftströmung nach dem Vorbild der vorgeschilderten Maßnahme zu aktivieren. Deswegen wird das (vorerwähnte) drehbeweglich gelagerte Lüfterrad (Gebläse) innerhalb dem Querschnitt des ersten Kanals 71 angeordnet, das mit Bestandteil der (allgemein kammerintem aufgenommenen) Turboluftmaschine 3 ist. Letztere ist endseitig an einer drehbeweglich gelagerten Antriebswelle 13 der Air-Cycle-Maschine 5, die den Betrieb von mit ihr wellenmechanisch verbundenen Turbinen T und / oder Kompressoren K umsetzt, befestigt. Das zur Luftabsaugung benötigte Lüfterrad wird- wie erwähnt - innerhalb dem ersten Kanal 71 an definierter Stelle angeordnet, welches bei einer vorteilhaften Luftanströmung durch im Kanalquerschnitt des ersten Kanals 71 stattfindende Lüfterradbewegung Kühlluft zu Teilmengen ansaugt und von dort aus der Luft-Mischstelle 10 zuführt. In diesem Fall ist der angesaugte Kühlluftstrom genügend stark genug ausgeprägt, um einen ausreichenden Druckluftstrom durch den ersten Kanal 71 umzusetzen. Der erste Kanal 71 befindet sich innerhalb einem Leitapparat 7, wobei letzterer (beispielbezogen) als Gehäuse mit einem radialförmig verlaufenden ersten Kanal 71 [nach den Figuren 1, 1A und 2A] oder aber (einfach) als Spiralgehäuse, als (gewundenes) Rohr oder möglicherweise als Plattendiffusor ausgebildet ist. Er ist innerhalb diesem Leitapparat 7 in axialer, diagonaler oder radialer Ausführung für den Transport der mit der Turboluftmaschine 3. angesaugten Kühlluft (denkbar auch als gemeinsame Kombination von diesen verschiedenen Kanalführungen] angeordnet ist.

Gleichfalls wird während der Luftansaugung durch den gebläseangesaugten Kühlluftstrom (nach dem Prinzip der Saugstrahlpumpe) eine geringe Teilmenge des wärmetauscherseitig abgegebenen Kühlluftstromes, dessen Strömung schwach ausgeprägt ist, einsetzen.

Beide (durch den ersten Kanal 71 und durch den abgeteilten Kanalbereich des zweiten Kanals 9 strömenden) Teilmengen von Kühlluft (temperaturerhöhter Stauluft) werden -auf diese Maßnahme bezogen - ebenfalls bis in den als Luft-Mischstelle 10 bezeichneten Kanalbereich (definierter Lage) geführt.

Im Anschluß wird die von der Luft-Mischstelle 10 abströmende Kühlluft (Gesamtmenge an Kühlluft), die sich (zu beiden Betriebszuständen des Flugzeuges) aus der Mischung (Vereinigung) beider (den ersten Kanal 71 und den querschnittsreduzierten Bereich des zweiten Kanals 9 passierenden) Teilmengen an Kühlluft (temperaturgehobener Stauluft) zusammensetzt, den wieder (stromabwärts der Luftmischstelle 10 gelegenen).einteilig ausgeführten Bereich des zweiten Kanals 9 passieren, und eine Verlängerung dieses (wieder) einteiligen zweiten Kanals 9, die der kammerextern angeordneten Air-Cycle-Maschine 5 zugewendet ist, durchströmen. Über den ausgangs der Verlängerung befindlichen Luftstromausgang wird diese Kühlluft dann zur Flugzeugumgebung abgegeben.

Damit wird erreicht, dass nun die Kombination aus Air-Cycle-Maschinen-Ausrichtung (bzw. Expansionsturbinenausgangsausrichtung), Wärmetauscheranströmung und Sammelkammerausgang eine in der gleichen Richtung liegende veränderte Einbaulage dieser Kombination umsetzt, ohne das nachteilig wirkende aerodynamisch Luftführungen zu den angegebenen unterschiedlichen Betriebszuständen (Boden- oder Flugphase) des Flugzeuges auftreten werden.

Gleichfalls werden begleitende wirtschaftliche Nachteile, die sich aus der weiteren Installation von zusätzlichen Bypassleitungen und Ventilen sowie gefolgt von notwendigen Veränderungen der Bauteiledimensionen (ungünstigenfalls auf engstem Raum) ergeben, vermieden, wodurch das Flugzeuggewicht konstant bleibt.

Anhand der Fig. 1A, die den Schnittbereich B1 - B2 der vorbeschriebenen Anordnung nach Fig. 1 wiedergibt, werden nun weitere Verbesserungen dieser Anordnung näher erläutert. Diese Verbesserungen betreffen (nach diesem Beispiel) den Bereich der Luft-Mischstelle 10 oder (denkbar auch) einen innerhalb dem querschnittsreduzierten Bereich des zweiten Kanals 9 [zur Luftmischung der Teil(kühl)lúftströme vorgesehenen] anderen ausgewählten (definierten) Kanalbereich ist, der dem Leitapparat 7 nachgeschalten ist und luftströmungstechnisch den ersten Kanal 8 mit diesem querschnittsreduzierten Bereich des zweiten Kanals 9 verbindet. In angegebenem Kanalbereich wird sinnvollerweise vorgesehen, eine schamierbeweglich befestigte Injektorklappe 11 anzuordnen, mittels der (im Bodenfall) die beiden Luftströmungen der über den ersten Kanal 71 angesaugten schnellen Luftströmung und gleichfalls die infolge der Injektorwirkung (Saugwirkung) nach dem Strahlpumpen-Prinzip über eine funktionelle Injektordüse mit einsetzende langsame Luftströmung, die innerhalb dem querschnittsreduzierten Kanalbereich des zweiten Kanals 9 einsetzt, vereint werden. Anderenfalls werden diese beiden Luftströmungen der (im Flugfall) über den querschnittsreduzierten Kanalbereich des zweiten Kanals 9 gedrückten (gepressten) schnellen Luftströmung und die infolge der über den ersten Kanal 71 infolge der Injektorwirkung (Saugwirkung) nach dem Strahlpumpenprinzip mit einsetzende langsame Luftströmung vereint. Femer ist die Installation einer innerhalb diesem Bereich der Luft-Mischstelle 10 ortsfest angeordneten Injektorklappe 11 (wegen Wegfallen der beweglichen Klappenfunktion zuungunsten der sich verschlechternden aerodynamischen Luftströmung) denkbar, deren räumliche Lage von den sie anströmenden Luftströmungen, also von den vorhandenen aerodynamischen Strömungsverhältnissen der Luftströmungen, beeinflusst wird.

Man kann außerdem davon ausgehen, dass im Bereich der Luft-Mischstelle 10 eine Injektorklappe 11 angeordnet ist, welche aufgrund ihrer (beispielgewählten) gewölbten oder (anderenfalls auch denkbar) flachen Gestalt und ihrer (beispielgewählten) starren oder (anderenfalls auch denkbar) beweglichen Kanalinnenwandungs-Befestigung aerodynamisch infolge der situationsabhängig auftretenden Luftströmung(en) (im Flug- oder Bodenfall) durch den ersten Kanal 71 und / oder durch den zweiten Kanal (9) die Funktion einer Injektordüse oder eines Rückschlagventiles ausübt. Nach der Fig. 1A wird - im Flugfall - der (vom Wärmetauscher 1 abströmende und) über den querschnittsreduzierten zweiten Kanal 9 strömende Kühlluftstrom den durch die innenwandkanalseitig befestigte Injektorklappe 11 reduzierten - und funktionell einer Injektordüse zugeordneten - Lufteintrittsbereich innerhalb der Luft-Mischstelle 10 passieren. Dieser stark ausgeprägte Kühlluftstrom wird am freien Ende der Injektorklappe 11 einen schwachen Kühlluftstrom, der über den ersten Kanal 71 strömen wird, nach dem Prinzip der Funktion einer Strahlpumpe, auslösen. Genannte Beobachtungen wird man auch bei einer scharnierbeweglich befestigten Injektorklappe 11 feststellen. Sofern die Kühlluftströmung einmal dermaßen stark ausgeprägt ist, dass die bewegliche Injektorklappe 11 (egal zu welcher Situation) den betreffenden Kanalaustritt verschließt, wirkt sie in der kanalverschließenden Richtung als Rückschlagventil. Bei der in Fig. 1A gezeigten starr befestigten Injektorklappe 11 wird keine Rückschlagventilfunktion auftreten.

Allgemein betrachtet ist die Injektorklappe 11 kanalintern an einem vom ersten Kanal 71 mit dem querschnittsreduzierten Kanalbereich des zweiten Kanals 9 durch Fügung gebildeten Übergangsbereich oder an der Kanalinnenwandung des ersten oder des zweiten Kanals 71, 9 innerhalb der Luft-Mischstelle 10 einseitig befestigt, Dabei ist der Klappenbereich (beispielsweise von) der (schamier)beweglich befestigten Injektorklappe 11 in Abhängigkeit der (im Flug- oder Bodenfall auftretenden) aktuellen Luftströmungsverhältnisse mit einer dem Luftaustritt(sbereich) des ersten Kanals 71 oder einer dem reduzierten Kanalquerschnitt des zweiten Kanals 9 beabstandeten Klappenlage angeordnet. Anderenfalls findet man bei einer einseitig ortsfest angeordneten Injektorklappe 11 eine Klappenlage vor, wonach deren nicht befestigter Klappen-Endbereich innerhalb dem Kanalquerschnitt in der (etwa angepassten) Richtung des Kanalverlaufes des reduzierten zweiten Kanals 9 verlaufend angeordnet ist.

Diese Injektorklappe 11 ist mit einem (beispielgewählten) parabelastähnlichen oder (anderenfalls) keine Wölbung besitzenden Klappenbereich versehen, welcher in Abhängigkeit der aktuellen Luftströmungsverhältnisse (im Flug- oder Bodenfall) mit einer dem Luftaustritt(sbereich) des ersten Kanals 71 zugewandten und gewölbten oder ebenen Plattenlage diesem beabstandet angeordnet ist oder mit einer dem reduzierten Kanalquerschnitt des zweiten Kanals 9 abgewandten und gewölbten oder ebenen Plattenlage diesem beabstandet angeordnet ist oder dessen nicht befestigter und annähernd geebnet ausgebildeter Klappenendbereich beabstandet dem Luftaustrittsbereich des ersten und des zweiten Kanals 71, 9 in Richtung des Kanalverlaufes des (querschnittsreduzierten) zweiten Kanals 9 angeordnet ist.

In der Fig. 2 wird nun die Draufsicht der Anordnung zur Zwangsführung eines Kühlluftstromes innerhalb eines Kühlaggregates für ein Verkehrsflugzeug gezeigt, auf die vorab schon eingegangen wird. Sie zeigt eine Auswahl der bisher besprochenen Elemente nach den Figuren 1 und 1A, aus der man (im Vergleich der Fig. 1) nicht die (nach dieser Darstellung) - dem (hier einmal zur Unterscheidung mit "91" verändert bezifferten) "nicht querschnittsreduzierten" Bereich des (nach den verbleibenden Figuren auch mit "9" bezifferten) zweiten Kanals 91 hinterseitige Anordnung des ersten Kanals 71 samt der im Bereich der Luft-Mischstelle 10 angeordneten Injektorklappe 11 und die Zusammenfassung des durch den ersten Kanal 71 strömenden Kühlluftstromes (Axialluftstromes vom Leitapparat 7) und den durch den reduzierten Kanalquerschnitt des zweiten Kanals 2 strömenden Stauluftmassenstrom erblicken wird. Auch wird die Längenbegrenzung L und die Breitenbegrenzung B der Wärmetauscher-Sammelkammer 4 (des Plenums) - ohne Leitapparat 7 - deutlich hervorgehoben.

In der Fig. 2A wird nun der erwähnte Leitapparat 7 an der Schnittstelle A1 - A2 nach der Fig. 2 gezeigt. Es wird ein mit einem ersten Kanal 71 ausgeführtes Gehäuse vorgestellt, innerhalb dem, - wie in der Fig. 1 am Beispiel des Verlaufs der Kühlluftströmung angedeutet -, die Kanalführung (des erwähnten ersten Kanals 71) radialförmig verläuft. Andere Kanalausführungen axialer oder diagonaler sind ebenfalls denkbar. Dabei wird innerhalb dem ersten Kanal 71 der Transport der - im Bodenfall - von der Turboluftmaschine 3 (respektive vom Lüfterrad) angesaugten Kühlluft (gemäß der nach Fig.2A gewählten Darstellung) umgesetzt, das - im Flugfall (in hohen Flughöhen) - nur mitdreht, wobei das Mitdrehen des Lüfterrades auf eine Verschiebung des Betriebspunktes (des Arbeitspunktes des Lüfterrades) zurückgeführt wird.

An dieser Stelle wird hervorgehoben, dass der- infolge der aktuellen (vorhandenen) Injektorklappenstellung - einsetzende Kühlluftstrom sowohl im Boden- als auch im Flugfall des Flugzeuges gewollt ist, weil er mithilft, entsprechend aufzubringende Kühlleistung innerhalb dem Wärmetauscher 1 einzusparen.

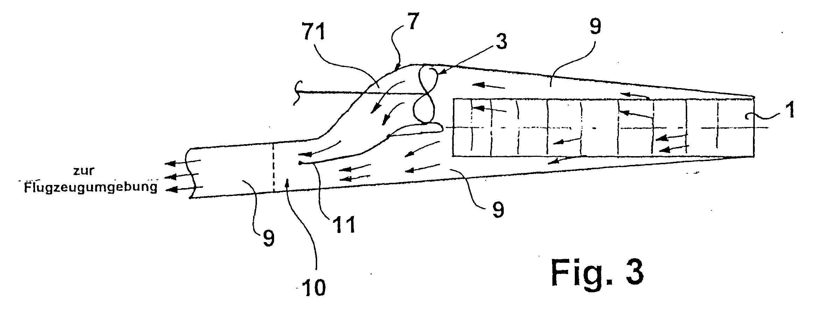

In der Fig. 3 wird abschließend eine vereinfachte Ausführung der Anordnung nach der Fig. 1 (Seitenansicht der Anordnung zur Zwangsführung eines Kühlluftstromes innerhalb eines Kühlaggregates für ein Verkehrsflugzeug) vorgestellt. Aus dieser Ansicht kann man den Übergang eines Leitapparates 7 mit einer (auf die axiale Kanalführung des querschnittsreduzierten zweiten Kanals 9 bezogen) zur Kanalachse der. Luft-Mischstelle 10 radial geneigten (abgesenkten) Kanalführung des ersten Kanals 71 ersehen, wobei der erste Kanal 71 und der querschnittsreduzierte Bereich des zweiten Kanals 9 durch die Injektorklappe 11 zueinander bereichsweise abgetrennt sind.

Zusammenfassend wird erwähnt, dass eine Anordnung zur Zwangsführung eines Kühlluftstromes für ein Verkehrsflugzeug vorgestellt wird, nach der eine Wärmetauscher-Sammelkammer (auch "Plenum" bezeichnet) in zwei Kanäle 71, 9 erweitert wird. Im ersten Kanal 71 befindet sich eine Turboluftmaschine 3, welche optimal (vorteilhaft) angeströmt die von ihr angesaugte Kühlluft durch einen nachgeschalteten Leitapparat 7 wieder dem zweiten Kanal 9 zuführt. Der zweite Kanal 9 ist ausgangsseitig mit der Flugzeugumgebung verbunden und vereint den ersten Kanal 71 an der Luft-Mischstelle 10, die im zweiten Kanal 9 integriert ist. Die Luft-Mischstelle 10 kann eine Injektordüse enthalten, welche durch ein Rückschlagventil im zweiten Kanal 9 oberhalb der Luft-Mischstelle 10 ergänzt wird. Die Luft-Mischstelie 10 kann außerdem eine Injektorklappe 11 enthalten, die aerodynamisch als Injektor und gleichfalls als Rückschlagventil (der vorgenannten Art) wirkt. Der Leitapparat 7 der Turbo(kühl)luftmaschine 3, beispielsweise in axialer, diagonaler oder radialer Ausführung) kann als Rohr, Spiralgehäuse, Plattendiffusor oder Kanal ausgebildet sein. Ein Einsatz der Anordnung wird- wegen der aerodynamischen und wirtschaftlichen Vorteile vorrangig in Großraum(verkehrs)flugzeugen gesehen.

## Patentansprüche

1. **Anordnung zur Zwangsführung eines Kühlluftstromes innerhalb eines Kühlaggregates für ein Verkehrsflugzeug,** mit einem Wärmetauscher (1), dem ein aus der Flugzeugumgebung luftaufnehmender Einlasskanal (8) und eine an die Flugzeugumgebung luftabführende Wärmetauscher-Sammelkammer (4) sowie ein mit Prozessluft (mit Bleed Air) gespeister Zuluftkanal (15) angeschlossen ist, **dadurch gekennzeichnet, dass** die Wärmetauscher-Sammelkammer (4) mit wenigsten zwei Kanälen (71, 9) ausgestattet ist, die von dem luftabführenden Wärmetauscher (1) situationsabhängig mit Luft versorgt werden, dabei einem zweiten Kanal (9), der dem Wärmetauscher (1) ausgangsseitig direkt angeschlossen ist, ein erster Kanal (71) abgezweigt ist, dessen Ausgang einem als Luft-Mischstelle (10) definierten Kanalbereich des zweiten Kanals (9) zugeschalten ist, und am Eingang des ersten Kanals (71) eine Turboluftmaschine (3) installiert ist, mit der in sehr niedriger Flughöhe oder bei Bodenhaftung des Flugzeuges aus der Flugzeugumgebung über den Wärmetauscher (1) geführte Kühlluft angesaugt wird, die während des Fluges in höherer Fluglage des Flugzeuges als Stauluft direkt durch den zweiten Kanal (9) gedrückt wird, und die Verlängerung des zweiten Kanals (9) einer kammerextern angeordneten Air-Cycle-Maschine (5) zugewendet ist, dabei der Luftstromausgang ausgangs der Verlängerung befindlich ist.

2. **Wärmetauscher-Sammelkammer** nach Anspruch 1, **dadurch gekennzeichnet, dass** die kammerintern aufgenommene Turboluftmaschine (3) endseitig an einer drehbeweglich gelagerten Antriebswelle (13) der Air-Cycle-Maschine (5), die den Betrieb von mit ihr wellenmechanisch verbundenen Turbinen (T) und / oder Kompressoren (K) umsetzt, befestigt ist, die innerhalb dem ersten Kanal (71) angeordnet ist, welche bei einer vorteilhaften Luftanströmung die in den ersten Kanal (71) angesaugte Luft der Luft-Mischstelle (10) des zweiten Kanals (9) zuführt.

3. **Wärmetauscher-Sammelkammer** nach den Ansprüchen 1 und 2, **dadurch gekennzeichnet, dass** der erste Kanal (71) innerhalb einem Leitapparat (7) in axialer, diagonaler oder radialer Ausführung für den Transport der mit der Turboluftmaschine (3) angesaugten Kühlluft angeordnet ist.

4. **Wärmetauscher-Sammelkammer** nach den Ansprüchen 1 und 2, **dadurch gekennzeichnet, dass** der Leitapparat (7) als Rohr, Spiralgehäuse oder Plattendiffusor ausgebildet ist.

5. **Wärmetauscher-Sammelkammer** nach den Ansprüchen 1, 3, 6 und 7, **dadurch gekennzeichnet, dass** die Luft-Mischstelle (10) ein innerhalb dem zweiten Kanal (9) definierter Kanalbereich ist, der dem Leitapparat (7) nachgeschalten ist und luftströmungstechnisch den ersten Kanal (8) mit dem zweiten Kanal (9) verbindet, wobei in diesem Bereich bei einer scharnierbeweglich befestigten Injektorklappe (11) die beiden Luftströmungen der über den ersten Kanal (71) angesaugten schnellen Luftströmung und gleichfalls die infolge der Saugwirkung über die funktionelle Injektordüse einsetzende langsame Luftströmung vereint werden, anderenfalls die beiden Luftströmungen der über den zweiten Kanal (9) gepressten schnellen Luftströmung und die infolge der über den ersten Kanal (71) mit einsetzende langsame Luftströmung vereint werden, oder bei einer ortsfest angeordneten Injektorklappe (11), die von der räumliche Lage der Injektorklappe (11) und von den vorhandenen aerodynamischen Strömungsverhältnissen der sie anströmenden Luftströmungen beeinflusst wird, vereint werden.

6. **Wärmetauscher-Sammelkammer** nach den Ansprüchen 1 und 2, **dadurch gekennzeichnet, dass** im Bereich der Luft-Mischstelle (10) eine Injektorklappe (11) angeordnet ist, welche aufgrund ihrer gewölbten oder flachen Gestalt und ihrer starren oder beweglichen Kanalinnenwandungs-Befestigung aerodynamisch infolge der situationsabhängig auftretenden Luftströmung(en) durch den ersten Kanal (71) und / oder durch den zweiten Kanal (9) die Funktion einer Injektordüse oder eines Rückschlagventiles ausübt.

7. **Wärmetauscher-Sammelkammer** nach Anspruch 6, **dadurch gekennzeichnet, dass** die Injektorklappe (11) kanalintern an einem vom ersten Kanal (71) mit dem zweiten Kanal (9) durch Fügung gebildeten Übergangsbereich oder an der Kanalinnenwandung des ersten oder des zweiten Kanals (71, 9) einseitig befestigt ist, dabei der Klappenbereich der (scharnier)beweglich befestigten Injektorklappe (11) in Abhängigkeit der aktuellen Luftströmungsverhältnisse mit einer dem Luftaustritt(sbereich) des ersten Kanals (71) oder einer dem Kanalquerschnitt des zweiten Kanals (9) beabstandeten Klappenlage oder bei einer einseitig ortsfest angeordneten Injektorklappe (11), die einer Klappenlage des nicht befestigten Klappen-Endbereiches innerhalb dem Kanalquerschnitt etwa in der Richtung des Kanalverlaufes des zweiten Kanals (9) angepasst ist, angeordnet ist.

8. **Wärmetauscher-Sammelkammer** nach Anspruch 7, **dadurch gekennzeichnet, dass** die Injektorklappe (11) mit einem parabelastähnlichen oder keine Wölbung besitzenden Klappenbereich versehen ist, welcher in Abhängigkeit der aktuellen Luftströmungsverhältnisse mit einer dem Luftaustritt(sbereich) des ersten Kanals (71) zugewandten und gewölbten oder ebenen Plattenlage diesem beabstandet angeordnet ist oder mit einer dem Kanalquerschnitt des zweiten Kanals (9) abgewandten und gewölbten oder ebenen Plattenlage diesem beabstandet angeordnet ist oder dessen nicht befestigter und annähernd geebnet ausgebildeter Klappenendbereich beabstandet dem Luftaustrittsbereich des ersten und des zweiten Kanals (71, 9) in Richtung des Kanalverlaufes des zweiten Kanals (9) angeordnet ist.
